# EUROPÄISCHE PATENTSCHRIFT

(11) **EP 2 039 971 B1**
(45) Veröffentlichungstag und Bekanntmachung des Hinweises auf die Patenterteilung: **21.11.2012**
(21) Anmeldenummer: 08013443.0
(22) Anmeldetag: 25.07.2008
(51) Int. Cl.: F16L 1/028, F16L 1/032, E02F 5/10, E02F 5/14, E02F 9/26, E03F 3/06, G01C 15/00, H02G 1/06, F16L 1/11

(54) **Verfahren und System zum überwachten Verlegen von Leitungen im Erdreich**
Method and device for monitored laying of pipes in the ground
Procédé et système destinés à la pose contrôlée de conduites enterrées

(30) Priorität: 13.09.2007 DE 102007043647
(43) Veröffentlichungstag der Anmeldung: 25.03.2009
(73) Patentinhaber: IFK Gesellschaft m.b.H., 5020 Salzburg (AT)
(72) Erfinder: Kuchler, Thomas, 94491 Hengersberg (DE); Frisch, Walter, 5020 Salzburg (AT)
(74) Vertreter: Manitz, Finsterwald & Partner GbR

(56) Entgegenhaltungen:
- WO-A1-94/01812
- FR-A1- 2 506 114
- GB-A- 2 166 602
- US-A- 4 050 171
- US-A- 4 807 131
- US-A1- 2006 201 007

## Beschreibung

Die vorliegende Erfindung betrifft ein Verfahren gemäß dem Oberbegriff des Anspruchs 1 zum überwachten Verlegen von Leitungen im Erdreich. Ferner betrifft die Erfindung ein System gemäß dem Oberbegriff des Anspruchs 10, mit dem sich Leitungen im Erdreich überwacht verlegen lassen. Ein derartiges Verfahren sowie solch ein System werden beispielsweise in der FR 2 506 114 A1 beschrieben, die den Oberbegriff des Anspruchs 1 bzw. Anspruchs 10 darstellt.

Sofern im Rahmen der vorliegenden Erfindung von Leitungen die Rede ist, so sind hierunter Rohre wie beispielsweise (Ab)-Wasserleitungen mit Sohlgefälle und/oder elektrische Leitungskabel wie beispielsweise Starkstromkabel, insbesondere Starkstromkabel mit einer Spannungsfestigkeit von 110 kV und mehr zu verstehen.

Da Leitungen üblicherweise unter Flur verlegt werden, ist es im Rahmen der Leitungsverlegung meist erforderlich, zunächst beispielsweise mit einem Bagger entlang der geplanten Leitungstrasse einen Graben auszuheben, in welchem anschließend die Leitung angeordnet bzw. verlegt wird. Abschließend muss dann der Graben mit dem zuvor entfernten Aushubmaterial wieder verschlossen werden. Diese herkömmliche offene Bauweise ist jedoch verhältnismäßig arbeitsintensiv und daher in wirtschaftlicher Hinsicht nur wenig rentabel.

Ein wirtschaftlicheres Verfahren zum Verlegen von Leitungen stellt das sogenannte Pflügeverfahren dar. Bei diesem Verfahren wird mit Hilfe eines sogenannten Verlegepflugs ein schmaler grabenartiger Schlitz im Erdreich erzeugt, wobei während der Herstellung des Schlitzes gleichzeitig eine oder mehrere Leitungen auf der Sohle des Schlitzes abgelegt werden. Zur Herstellung des Schlitzes weist dabei der Verlegepflug als Arbeitsorgan ein so genanntes Pflugschwert auf, welches mit hohen Kräften das Erdreich auseinanderpresst, wenn sich der Verlegepflug entlang der geplanten Leitungstrasse bewegt. Um die Leitung dabei in den Schlitz einführen und auf dessen Sohle ablegen zu können, ist dem Pflugschwert ein Einführelement nachgeordnet und mit dem Pflugschwert gekoppelt, welches zusammen mit dem Pflugschwert von dem Verlegepflug durch den von dem Pflugschwert unmittelbar zuvor erzeugten Schlitz gezogen wird. Während sich der Verlegepflug entlang der geplanten Leitungstrasse bewegt, wird also gleichzeitig die Leitung durch das Einführelement in den Schlitz eingeführt und auf dessen Sohle abgelegt. Nach dem Verlegevorgang schließt sich der Verlegeschlitz wieder selbsttätig ohne weiteres Zutun, da das zuvor aufgepflügte Erdmaterial von selbst wieder zurück in den Verlegeschlitz fällt.

Bei einem anderen als Torpedo- oder Raketenpflugverfahren bekannten Pflügeverfahren wird ebenfalls mit einem Pflugschwert ein Schlitz im Erdreich erzeugt, wobei die einzupflügende Leitung an einem als Einführelement dienenden Aufweitkörper, welcher hinter dem Pflugschwert durch den zuvor erzeugten Schlitz gezogen wird, in den Schlitz eingezogen wird. Die Leitung wird somit über die gesamte Länge des erzeugten Schlitzes hinweg von einem Startpunkt aus in den Schlitz eingezogen.

Bei den genannten Pflügeverfahren kann jedoch nicht mit letzter Sicherheit eine Aussage darüber getroffen werden, ob die erforderliche Verlegetiefe der Leitung eingehalten wurde. Zwar ragt das Einführelement während des Verlegevorgangs aus dem Verlegeschlitz nach oben heraus, sodass grundsätzlich aus dem Überstand aus dem Erdreich auf die Verlegetiefe geschlossen werden könnte. Allerdings wird während des Einpflügevorgangs kontinuierlich Erdmaterial seitlich entlang des Verlegeschlitzes aufgehäuft, sodass anhand des Überstands des Einführelements über dieses aufgehäufte Erdmaterial nicht zuverlässig auf die Verlegetiefe in Bezug auf die ursprüngliche Geländeoberfläche geschlossen werden kann.

Gerade bei der Verlegung von Hochspannungsleitungen wie beispielsweise 110 kV-Leitungen ist es jedoch erforderlich, bestimmte vorgegebene Verlegetiefen aus Sicherheitsgründen einzuhalten. Ebenso ist es von höchster Wichtigkeit, die richtige Höhenlage von Gefälleleitungen wie beispielsweise (Ab)-Wasserleitungen einzuhalten, damit die Leitung das erforderliche Gefälle aufweist. Da die zuverlässige Einhaltung und Überwachung solcher vorgegebenen Verlegetiefen unter Verwendung des Pflügeverfahrens bislang jedoch nicht möglich ist, konnte das Pflügeverfahren bislang weder zur Verlegung von Hochspannungsleitungen wie beispielsweise 110 kV-Leitungen noch zur Verlegung von Gefälleleitungen zum Einsatz kommen.

Dementsprechend wäre es wünschenswert, zumindest eine Realisierung zu schaffen, die es erlaubt, auch Hochspannungsleitungen und/oder Gefälleleitungen unter Verwendung eines Pflügeverfahrens zu verlegen.

Die der Erfindung zugrunde liegende Aufgabe besteht somit darin, eine Realisierung anzugeben, welche eine überwachte Verlegung von Leitungen ermöglicht.

Diese Aufgabe wird durch ein Verfahren mit den Merkmalen des Anspruchs 1 sowie durch ein System mit den Merkmalen des Anspruchs 10 gelöst.

Gemäß einem ersten Aspekt der Erfindung wird dementsprechend ein Verfahren zum überwachten Verlegen von Leitungen im Erdreich vorgeschlagen, bei dem im Erdreich ein Verlegeschlitz zur Aufnahme der zu verlegenden Leitung erzeugt wird, wobei in den Verlegeschlitz mittels eines in den Verlegeschlitz hineinragenden Einführelements, welches auf der Sohle des Verlegeschlitzes in Längsrichtung des Verlegeschlitzes entlang bewegt wird, die Leitung in den Verlegeschlitz eingebracht wird. Zur Überwachung der Leitungspositionsdaten entlang der eingebrachten Leitung wird dabei wiederholt ein sich mit dem Einführelement mitbewegender, für die Verlegetiefe der Leitung repräsentativer Punkt ermittelt, welcher in vertikaler Richtung einen definierten, konstanten Abstand zu einer auf der Sohle des Verlegeschlitzes aufstehenden Unterseite des Einführelements aufweist.

Da insbesondere bei der Verlegung von Hochspannungsleitungen aus Sicherheitsgründen vorgegebene zulässige Zugspannungen in den Leitungen nicht überschritten werden dürfen, werden bei dem erfindungsgemäßen Verfahren die in der einzupflügenden Leitung herrschenden Zugkräfte, vorzugsweise kontinuierlich, ermittelt. Die Ermittlung der in der Leitung herrschenden Zugkräfte kann dabei dergestalt erfolgen, dass wiederholt eine von der einzupflügenden Leitung auf das Einführelement ausgeübte Kraft ermittelt und in eine Längszugkraft mit einem bestimmten Faktor umgerechnet wird.

So werden nämlich während des Einführens der Leitung durch das Einführelement in das Erdreich von der Leitung auf das Einführelement beispielsweise Reibungs- oder Umlenkkräfte ausgeübt, welche mit den in der Leitung herrschenden Zugkräften im Gleichgewicht stehen. Die Kräfte, welche während des Einführens der Leitung auf das Einführelement ausgeübt werden, sind daher für die in der Leitung herrschenden Zugkräfte repräsentativ, sodass mit Hilfe einer Kraftmesseinrichtung wie beispielsweise einer Kraftmessdose von der Leitung auf das Einführelement ausgeübten Kräfte mittels eines geeigneten Faktors in entsprechende Zugkräfte umgerechnet werden können, welche unter Umständen nach dem Ablegen der Leitung auf der Sohle des Verlegeschlitzes in der Leitung noch vorhanden sind.

Empirische Versuche haben dabei ergeben, dass dieser Faktor bei einer Konstellation einen Betrag von eins aufweist, sodass die an dem Einführelement gemessenen Kräfte direkt die nach dem Ablegen der Leitung auf der Sohle des Verlegeschlitzes noch vorhandenen Zugkräfte wiedergeben. Der Vollständigkeit halber sei an dieser Stelle jedoch erwähnt, dass der Umrechungsfaktor je nach Form des Einführelements sowie nach Art der Anbringung der Kraftmesseinrichtung am Einführelement und/oder auch in Abhängigkeit von den vorhandenen Bodenparametern abweichen kann.

In einem weiteren Verfahrensschritt werden dann erfindungsgemäß die ermittelten Zugkräfte, vorzugsweise die ermittelten Gelände- und Leitungskoordinaten, insbesondere deren jeweilige Höhenlage, in Abhängigkeit von den Lagekoordinaten der Leitungssolltrasse beispielsweise auf einem Anzeigebildschirm visualisiert, welcher sich im Führerstand des Verlegepflugs befindet. Durch eine derartige Visualisierung kann die den Verlegepflug bedienende Person manuell auf das Verfahren Einfluss nehmen, um beispielsweise die Verlegerichtung durch Veränderung des Seiteneinschlags oder der Neigung des Pflugschwerts oder dessen Höhenlage zu variieren.

Zwar lässt sich das Verfahren, nachdem eine etwaige Abweichung der eingepflügten Leitung von der Solltrasse festgestellt wurde, in der voran beschriebenen Art und Weise beeinflussen. Zu Zwecken der Qualitätssicherung und -überwachung kann es jedoch auch wünschenswert sein, eine Dokumentation des Verfahrens vorzusehen. Hierzu werden erfindungsgemäß die ermittelten Leitungskoordinaten sowie die ermittelten Zugkräfte in einer Protokolldatei abgespeichert. Die in der Protokolldatei abgespeicherten Informationen können dann zu einem späteren Zeitpunkt wieder abgerufen werden können, um tabellarisch und/oder graphisch visualisiert zu werden. Hierdurch kann eine Dokumentation über den tatsächlichen Verlauf der verlegten Leitung sowie die in der Leitung herrschenden Zugkräfte zur Verfügung gestellt werden, mit Hilfe derer sich die Einhaltung der erforderlichen Verlegetiefe sowie der zulässigen Zugkräfte zu Zwecken der Qualitätssicherung nachweisen lässt.

Gemäß einem zweiten Aspekt der Erfindung wird ein System zum überwachten Verlegen von Leitungen im Erdreich vorgeschlagen. Das System umfasst einen Verlegepflug, welcher als Arbeitsorgan ein Pflugschwert aufweist, mit dem sich in der eingangs beschriebenen Art und Weise ein Verlegeschlitz im Erdreich zur Aufnahme der zu verlegenden Leitung herstellen lässt. Mit dem Pflugschwert ist in gewohnter Weise ein Einführelement gekoppelt, bei dem es sich beispielsweise um den beim Torpedoverfahren zum Einsatz kommenden Aufweitkörper handeln kann, welches auf der Sohle des Verlegeschlitzes in Längsrichtung desselben bewegbar ist und welches dazu dient, die Leitung in den Verlegeschlitz einzuführen bzw. einzuziehen und auf dessen Sohle abzulegen. Erfindungsgemäß ist das Einführelement mit einem Reflektor gekoppelt, welcher sich an einem für die Verlegetiefe der Leitung repräsentativen Punkt befindet, welcher in vertikaler Richtung einen definierten, konstanten Abstand zu einer auf der Sohle des Verlegeschlitzes aufstehenden Unterseite des Einführelements aufweist. Darüber hinaus umfasst das System eine Einrichtung, welche eingerichtet ist, um während des Einführens der Leitung in den Verlegeschlitz bzw. auf dessen Sohle kontinuierlich die Position des Reflektors zu erfassen.

Zur Erfassung der in der eingepflügten Leitung herrschenden Zugkräfte umfasst das System erfindungsgemäß ferner eine Kraftmesseinrichtung, welche eingerichtet ist, um wiederholt eine von der einzupflügenden Leitung auf das Einführelement ausgeübte Kraft zu ermitteln und, vorzugsweise, in eine Längskraft umzurechnen. Die Kraftmesseinrichtung kann beispielsweise eine Kraftmessdose oder einen Dehnmessstreifen umfassen, welcher Verformungen des Einführelements erfasst, welche während des Einführens der Leitung auf das Einführelement beispielsweise durch Reibungs- oder Umlenkkräfte ausgeübt werden.

Gemäß einer Ausführungsform ist ferner erfindungsgemäß eine Ausgabeeinrichtung vorgesehen, welche eingerichtet ist, um die ermittelten Zugkräfte, vorzugsweise die ermittelten Gelände- und Leitungskoordinaten, insbesondere deren jeweilige Höhenlage, in Abhängigkeit von den Lagekoordinaten der Leitungssolltrasse visuell, insbesondere tabellarisch und/oder graphisch, darzustellen. Bei der Ausgabeeinrichtung kann es sich beispielsweise um einen Anzeigebildschirm handeln, welcher sich im Führerstand des Verlegepflugs befindet. Der Bedienperson, die den Verlegepflug steuert, werden somit kontinuierlich Informationen über die aktuelle Lage der gerade verlegten Leitung sowie über die darin herrschenden Zugkräfte zur Verfügung gestellt, sodass die Bedienperson bei Bedarf regelnd auf den weiteren Verlegevorgang Einfluss nehmen kann.

Bei der Ausgabeeinrichtung kann es sich auch beispielsweise um einen Drucker handeln, sodass durch Auswertung dessen Ausdrucks gegebenenfalls Stellen identifiziert werden können, an denen die Position der verlegten Leitung in einem nachgelagerten Bearbeitungsschritt händisch korrigiert werden muss. Gleichermaßen kann ein derartiger Ausdruck jedoch auch zu Zwecken der Qualitätssicherung zum Nachweis dienen, dass die vorgegebenen Verlegeparameter wie beispielsweise die geforderte Verlegetiefe entlang der gesamten Leitungstrasse eingehalten wurden.

Gemäß einer Ausführungsform ist ferner eine Speichereinrichtung erfindungsgemäß vorgesehen, welche eingerichtet ist, um die ermittelten Zugkräfte, vorzugsweise die ermittelten Gelände- und Leitungskoordinaten, insbesondere deren jeweilige Höhenlage, in Abhängigkeit von den Lagekoordinaten der Leitungssolltrasse abzuspeichern.

Wie aus der voranstehenden Darstellung der Erfindung entnommen werden kann, wird erfindungsgemäß also während des Einpflügens der Leitung im Erdreich die Verlegetiefe der Leitung dadurch bestimmt, dass kontinuierlich die Position eines für die Verlegetiefe der Leitung repräsentativen Punktes vermessen wird, welcher in einer vorherbestimmten relativen Beziehung zu dem Einführelement steht. Da der genannte Punkt in vertikaler Richtung einen definierten konstanten Abstand zu der auf der Sohle des Verlegeschlitzes aufstehenden Unterseite des Einführelements aufweist, ist es somit nach der Vermessung des genannten Punktes ohne Weiteres möglich, eine Aussage darüber zu treffen, welche Höhenlage die Sohle des Verlegeschlitzes aufweist und wie tief die Leitung verlegt wurde.

Es wird also nicht der Überstand des genannten Punktes an dem Einführelement über das aufgehäufte Erdmaterial gemessen, da dies zu verfälschten Ergebnissen führen kann; vielmehr wird erfindungsgemäß kontinuierlich die genaue Lage des genannten. Punktes an dem Einführelement in Bezug auf ein vorgegebenes Bezugsystem vermessen, so dass aus den so ermittelten Leitungskoordinaten genau auf die Verlegetiefe geschlossen werden kann.

Sofern im Rahmen der vorliegenden Erfindung von Leitungs- oder Geländepositionsdaten die Rede ist, so sind hierunter ganz allgemein geodätische Informationen zu verstehen, anhand derer ein Punkt im Raum bestimmt werden kann. Da herkömmliche Vermessungsgeräte wie beispielsweise Tachymeter nicht in der Lage sind, absolute Koordinaten in Bezug auf ein feststehendes Bezugsystem direkt zu ermitteln, sondern lediglich zur Messung von Winkeln und Entfernungen eingerichtet sind, kann es sich bei diesen Positionsdaten daher beispielsweise um geodätische Winkel- und/oder Entfernungsinformationen handeln, anhand derer aus einem zuvor vermessenen Punkt auf die Position eines Folgepunkts geschlossen werden kann. Bei den (Leitungs)-Positionsdaten handelt es sich somit entweder um absolute, also auf ein festes Bezugsystem bezogene, geodätische Daten, oder um relative, also auf einen zuvor vermessenen Punkt bezogene, geodätische Daten. Werden derartige Positionsdaten umgerechnet, um einen Punkt im Raum in Bezug auf ein festes Bezugs- bzw. Koordinatensystem bestimmen zu können, so werden hierunter dann Leitung- bzw. Geländekoordinaten verstanden, wobei die z-Koordinate beispielsweise die geodätische Höhenlage der Leitung über N.N. und die x-und y- Koordinaten deren Lage in der horizontalen Ebene in Bezug auf beispielsweise ein Landeskoordinatensystem angeben können.

Vorteilhafte Ausführungsformen der Erfindung ergeben sich aus den Unteransprüchen, der Beschreibung sowie den Zeichnungen.

Im Folgenden wird zunächst auf spezielle Ausführungsformen des erfindungsgemäßen Verfahrens eingegangen, deren Aspekte sich jedoch in entsprechender Weise auf das erfindungsgemäße System übertragen lassen.

So wird gemäß einer ersten Ausführungsform des Verfahrens auf Grundlage der Leitungspositionsdaten die Höhenlage der in den Verlegeschlitz eingebrachten Leitung in Abhängigkeit von ihren Lagekoordinaten bestimmt. Die Leitungspositionsdaten liegen somit als eine Vielzahl von Koordinatentripeln vor, wobei in Abhängigkeit von der Lage der Leitung in der horizontal liegenden x-y-Ebene eine Aussage über dessen Höhenlage in z-Richtung vorgenommen werden kann.

Zwar ließe sich die Höhenlage der eingepflügten Leitung auch derart ermitteln, dass die Höhenlage in Abhängigkeit von der Längenentwicklung der eingepflügter Leitung bestimmt wird, welche in laufenden Metern ab einem Startpunkt gemessen wird, jedoch ließe sich hierbei keine Aussage über die korrekte Lage der Leitung in der horizontalen Ebene in x- und y-Richtung treffen. Wenn hingegen die Leitungspositionsdaten in der genannten Weise als Koordinatentripel vorliegen, lässt sich nicht nur eine Aussage über die Höhenlage in z-Richtung der verlegten Leitung treffen; vielmehr kann durch einen Vergleich der Koordinatensolldaten in der Ebene mit den Koordinatenistdaten in der Ebene eine Aussage darüber getroffen werden, ob der Verlauf der Solltrasse eingehalten wurde.

Zwar sind vielerorts Höhenpläne verfügbar, welche zu Zwecken der Leitungstrassierung herangezogen werden können, jedoch erfassen diese Höhenpläne in aller Regel nicht kleinere örtliche Gegebenheiten wie beispielsweise lokale Geländeerhebungen oder -senken, welche jedoch bei der Trassenplanung berücksichtigt werden müssen, um die erforderliche Verlegetiefe einzuhalten.

Dementsprechend kann in einem vorgelagerten Verfahrensschritt zunächst das Gelände entlang der geplanten Leitungssolltrasse genau vermessen werden, um Geländekoordinaten zu erhalten, welche auch kleinere örtliche Gegebenheiten berücksichtigen. Im Falle, dass bei dem Erfassen der Geländekoordinaten die Höhenlage des Geländes in Abhängigkeit von den in die x-y-Ebene projizierten Lagekoordinaten der Leitungstrasse erfasst wird, lässt sich durch Vergleich der tatsächlichen Höhenlage mit der Sollhöhenlage nicht nur eine Aussage über die Einhaltung der erforderlichen Verlegetiefe treffen; vielmehr kann durch Gegenüberstellung der Istkoordinaten der verlegten Leitung in der Ebene und der Sollkoordinaten in der Ebene eine Aussage darüber getroffen werden, ob der Solltrassenverlauf eingehalten wurde, was insbesondere im Hinblick auf die Einhaltung von bestimmten Abständen von kritischen Punkten sowie die Einhaltung des Sohlgefälles bei Gefälleleitungen wünschenswert sein kann.

Bereits während des Verlegens der Leitung kann in der voranstehend beschriebenen Art und Weise eine Lageabweichung der eingepflügten Leitung gegenüber der Leitungssolltrasse ermittelt werden. Wenn eine etwaige Lageabweichung ermittelt wurde, kann dann sofort auf den Verlegevorgang Einfluss genommen werden, um die Leitung wieder der Leitungssolltrasse anzunähern. Hierzu kann ein eine etwaige Lageabweichung repräsentierendes Signal erzeugt werden, unter Verwendung dessen die Bewegungsrichtung des Pflugschwerts gesteuert wird, welches zur Erzeugung des Verlegeschlitzes dient. So kann beispielsweise in Abhängigkeit von der ermittelten Lageabweichung der Seitenausschlag des Pflugschwerts oder dessen Neigung geändert werden, sodass der Verlegeschlitz bzw. dessen Sohle, auf dem die Leitung von dem Einführelement abgelegt wird, sich zunehmend wieder dem Sollverlauf annähert. Da die Einhaltung der erforderlichen Erdüberdeckung, also die Einhaltung der Verlegetiefe, bzw. des erforderlichen Sohlgefälles jedoch die am meisten maßgeblichen Kriterien sind, damit auch Hochspannungsleitungen oder Gefälleleitungen im Pflügeverfahren verlegt werden können, sollte insbesondere die Pflügetiefe des Pflugschwerts unter Berücksichtigung der Höhenlage des Geländes und der Höhenlage der eingepflügten Leitung gesteuert werden. Solange nämlich die erforderliche Überdeckung bzw. das erforderliche Sohlgefälle eingehalten wird, können geringfügige Lageabweichungen der eingepflügten Trasse in der horizontalen Ebene in x- und y-Richtung vernachlässigt werden.

Zwar kann grundsätzlich jede Einrichtung zur Ermittlung der Leitungspositionsdaten einer eingepflügten Leitung verwendet werden, welche zur Vermessung des für die Verlegetiefe der Leitung repräsentativen mit dem Einführelement gekoppelten Punktes geeignet ist. Es kann sich jedoch als vorteilhaft erweisen, zur Ermittlung der Leitungspositionsdaten die Position des sich mit dem Einführelement mitbewegenden Punkts durch Tachymetrieren, insbesondere mit Hilfe einer selbsttätigen Totalstation mit automatischer Zielverfolgung zu bestimmen. Die Positionsbestimmung mittels Tachymetrieren und insbesondere mit Hilfe einer selbsttätigen Totalstation mit automatischer Zielverfolgung durchzuführen, erweist sich dadurch als vorteilhaft, dass hierdurch das Verfahren weiter automatisiert und damit rationalisiert werden kann, da zur Bestimmung der Lage der Leitung in der Ebene keine aufwändigen Vermessungsarbeiten beispielsweise unter Verwendung von Maßbändern erforderlich werden. Insbesondere durch die Verwendung einer selbsttätigen Totalstation mit automatischer Zielverfolgung kann somit ein kontinuierlicher Verlegefortschritt erzielt werden.

Im Folgenden wird nun auf bevorzugte Ausführungsformen des erfindungsgemäßen Systems zum überwachten Verlegen von Leitungen im Erdreich eingegangen, wobei sich die unter Bezugnahme auf das System beschriebenen Aspekte in entsprechender Weise auch auf das erfindungsgemäße Verfahren übertragen lassen.

So weist der für die Verlegetiefe repräsentative Punkt, an welchem sich der Reflektor befindet, nicht nur in vertikaler sondern auch in horizontaler Richtung einen definierten Abstand zu der Stelle an der Unterseite des Einführelements auf, welche auf der Sohle des Verlegeschlitzes aufsteht. Hierdurch kann gewährleistet werden, dass die aktuell erfasste Höhenlage der in den Verlegeschlitz eingebrachten Leitung den jeweils zugehörigen Leitungskoordinaten in der Ebene zugeordnet werden kann.

Gemäß einer Ausführungsform umfasst das erfindungsgemäße System eine Auswerteeinheit, welche speziell eingerichtet ist, um auf Grundlage der von der Erfassungseinrichtung erfassten Positionsdaten die Höhenlage der eingepflügten Leitung in Abhängigkeit von deren Lagekoordinaten zu bestimmen. Da es sich bei der Erfassungseinrichtung gemäß einer bevorzugten Ausführungsform um einen Tachymeter und insbesondere um eine selbsttätige Totalstation mit automatischer Zielverfolgung handelt, kann es sich bei der Auswerteeinheit beispielsweise um einen Mikrocomputer handeln, welcher programmtechnisch derart eingerichtet ist, dass er die von dem Tachymeter bzw. der Totalstation zur Verfügung gestellten Winkel- und Entfernungsangaben in Koordinatentripel umrechnen kann.

Da es zu Steuerungszwecken beispielsweise wünschenswert sein kann, ein die Lageabweichung repräsentierendes Signal zur Verfügung stellen zu können, wie dies bereits zuvor unter Bezugnahme auf das erfindungsgemäße Verfahren beschrieben wurde, kann das erfindungsgemäße System ferner eine Vergleichseinheit umfassen, welche eingerichtet ist, um eine Lageabweichung der eingepflügten Leitung gegenüber einer Leitungssolltrasse zu ermitteln. Die Vergleichseinheit erzeugt aus der so ermittelten Lageabweichung ein entsprechendes Signal, welches für die Lageabweichung repräsentativ ist und stellt dieses an einer Schnittstelle zur weiteren Verwendung beispielsweise zu Steuerungszwecken zur Verfügung.

Gemäß einer weiteren Ausführungsform kann das System ferner eine Steuereinrichtung umfassen, welche eingerichtet ist, um in Abhängigkeit von einer etwaigen Abweichung der Istkoordinaten der Leitung gegenüber der Leitungssolltrasse die Bewegungsrichtung des Pflugschwerts einzustellen. Im Falle, dass das System in der voran beschriebenen Art und Weise eine Vergleichseinheit aufweist, welche ein eine etwaige Lageabweichung repräsentierendes Signal zur Verfügung stellt, kann die Steuereinheit insbesondere unter Verwendung des die Lageabweichung repräsentierenden Signals die Bewegungsrichtung des Pflugschwerts einstellen. Insbesondere kann die Steuereinrichtung eingerichtet sein, um in Abhängigkeit von der ermittelten Höhenlage der eingepflügten Leitung die Pflügetiefe des Pflugschwerts einzustellen. Es wird somit ein geschlossener Regelkreis zur Verfügung gestellt, mit welchem sich etwaige Lage- und Höhenabweichungen automatisch korrigieren lassen.

Da die Steuereinrichtung direkt auf die Bewegungsrichtung des Pflugschwerts Einfluss nehmen kann, befindet sich diese üblicherweise direkt am Verlegepflug. Die Vergleichseinheit und/oder die Auswerteeinheit können sich jedoch entweder am Verlegepflug oder auch am oder in der Nähe des Tachymeters befinden. Die Steuereinheit und die Vergleichseinheit und/oder die Auswerteeinheit und die Vergleichseinheit können daher drahtlos miteinander kommunizieren, was sich insbesondere dann als vorteilhaft erweist, wenn als Erfassungseinrichtung ein Tachymeter oder eine Totalstation mit automatischer Zielverfolgung zum Einsatz kommt, welche sich in großer Entfernung von dem Verlegepflug befindet.

Im Folgenden wird nun die Erfindung rein exemplarisch anhand einer beispielhaften Ausführungsform unter Bezugnahme auf die beigefügten Zeichnungen beschrieben, wobei:
- Fig. 1: eine schematische Darstellung des erfindungsgemäßen Systems zum überwachten Verlegen von Leitungen im Erdreich zeigt;
- Fig. 2: einen Bildschirmausdruck eines als Ausgabeeinrichtung dienenden Anzeigebildschirms zeigt;
- Fig. 3: eine Dokumentation einer Leitungsverlegung unter Verwendung des erfindungsgemäßen Systems und des erfindungsgemäßen Verfahrens in tabellarischer Darstellung zeigt; und
- Fig. 4: eine Dokumentation einer Leitungsverlegung unter Verwendung des erfindungsgemäßen Systems und des erfindungsgemäßen Verfahrens in graphischer Darstellung zeigt.

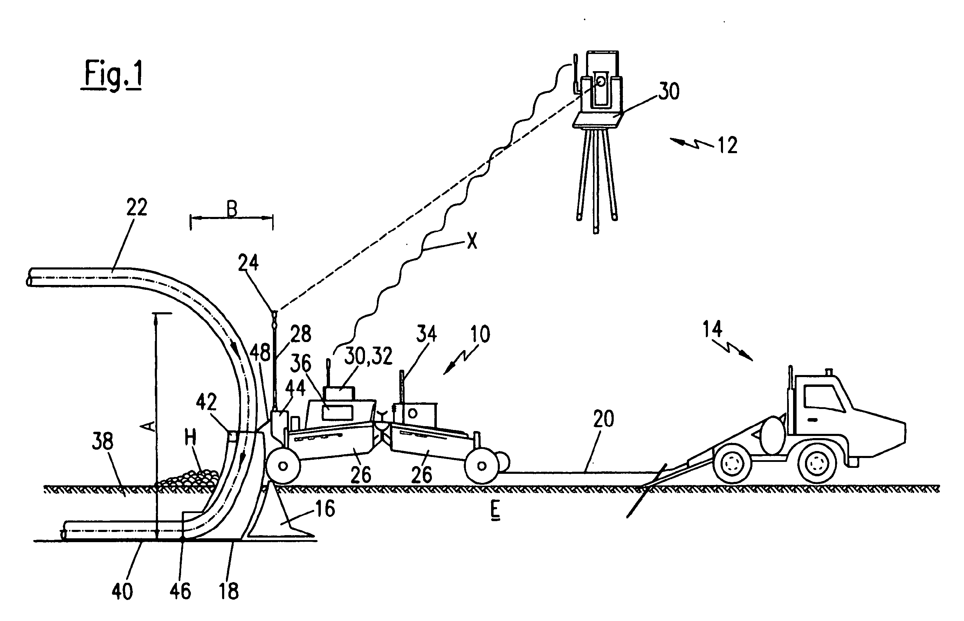

Zunächst wird im Folgenden unter Bezugnahme auf die Fig. 1 das Pflügeverfahren an sich zur Verlegung von Leitungen beschrieben. Bei dem Verfahren wird mit Hilfe eines Verlegepflugfahrzeugs 10 bzw. mit einem an dem Verlegepflugfahrzeug 10 gekoppelten Arbeitsorgan 16, 18 ein Verlegeschlitz 38 erzeugt, wobei während der Herstellung des Verlegeschlitzes gleichzeitig eine oder mehrere Leitungen 22 auf der Sohle 40 des Verlegeschlitzes 38 abgelegt werden. Das Verlegepflugfahrzeug 10 ist dabei über ein Seil 20 mit einem Zugfahrzeug 14 verbunden, welches das Verlegepflugfahrzeug 10 entlang der geplanten Leitungstrasse zieht. Das Verlegepflugfahrzeug 10 besteht im Wesentlichen aus einem Fahrgestell, an dem vier Auslegerarme 26 auskragend angebracht sind, an deren freien Enden sich jeweils ein Rad befindet. Die Auslegerarme 26 sind allseits bewegbar am Fahrgestell angelenkt, um im Falle des Vorhandenseins von Hindernissen verschwenkt werden zu können.

Zur Herstellung des Verlegeschlitzes 38 umfasst das Arbeitsorgan 16, 18 des Verlegepflugfahrzeugs 10 ein vorauseilendes Pflugschwert 16, welches mit hohen Kräften das Erdreich E auseinanderpresst, wenn das Verlegepflugfahrzeug 10 von dem Zugfahrzeug 14 entlang der geplanten Leitungstrasse gezogen wird. Dem Pflugschwert 16 ist ein mit dem Pflugschwert 16 gekoppeltes Einführungselement 18 nachgeordnet, welches mit dem Pflugschwert 16 durch den erzeugten Schlitz 38 gezogen wird.

Das Einführelement 18 fungiert dabei gewissermaßen als Einführtrichter, um die Leitung 22 in den kurz zuvor von dem Pflugschwert 16 erzeugten Verlegeschlitz 38 einführen und auf dessen Sohle 38 ablegen zu können.

Wie der Darstellung der Fig. 1 entnommen werden kann, entsteht direkt im Bereich des Arbeitsorgans 16, 18 bedingt durch den Pflügevorgang eine Erdanhäufung H, weshalb anhand des reinen Überstands des Einführelements 18 über das Erdreich nicht zuverlässig auf die Verlegetiefe in Bezug auf die ursprüngliche Geländeoberfläche geschlossen werden kann.

Erfindungsgemäß wird daher vorgeschlagen, während des Einführens der Leitung 22 in den Verlegeschlitz 38 wiederholt einen sich mit dem Einführelement 18 mitbewegenden, für die Verlegetiefe der Leitung 22 repräsentativen Punkt zu vermessen, welcher in vertikaler Richtung einen definierten, konstanten Abstand A zu einer auf der Sohle 40 des Verlegeschlitzes 38 aufstehenden Unterseite des Einführelements 18 aufweist. Unter Verwendung der auf diese Weise entlang der eingefügten Leitung 22 erhaltenen Leitungspositionsdaten kann dann auf die vorhandene Verlegetiefe und/oder die Lage der Leitung 22 in der x-y-Ebene geschlossen werden.

Zur Bestimmung der Leitungspositionsdaten ist mit dem Einführelement 18 ein Reflektor 24, bei dem es sich insbesondere um ein aktives Prisma 24 handeln kann, gekoppelt, welcher sich an dem für die Verlegetiefe der Leitung 22 repräsentativen Punkt befindet, der in vertikaler Richtung einen definierten, konstanten Abstand A zu der auf der Sohle 40 des Verlegeschlitzes 38 aufstehenden Unterseite des Einführelements 18 aufweist. Wie der Fig. 1 entnommen werden kann, ist der Reflektor 24 dabei über einen Stab 28 an einem Tragkörper 44 befestigt, welcher mit dem Einführelement 18 derart gekoppelt ist, dass der für die Verlegetiefe repräsentative Punkt, an welchem sich der Reflektor 24 befindet, in sowohl vertikaler als auch in horizontaler Richtung jeweils einen konstanten und vorbestimmten Abstand A, B zu der Stelle 46 an der Unterseite des Einführelements 18 aufweist, welche auf der Sohle 40 des Verlegeschlitzes 38 aufsteht. Diese Kopplung ist in der Fig. 1 schematisch durch eine gestrichelte Linie 48 zwischen dem Tragkörper 44 und dem Einführelement 18 angedeutet. Anstelle den Reflektor 24 über den Stab 28 an dem Tragkörper 44 zu befestigen, wäre es jedoch ebenfalls möglich, den Reflektor 24 über den Stab 28 direkt an dem Einführelement 18 anzubringen, solange gewährleistet ist, dass der Reflektor 24 trotz der durch das Pflugschwert 16 erzeugten Erdanhäufung H zu Vermessungszwecken sichtbar bleibt.

Zur Erfassung der Leitungspositionsdaten weist das erfindungsgemäße System zum überwachten Verlegen von Leitungen 22 im Erdreich E ferner eine Einrichtung 12 auf, mit der sich während des Einführens der Leitung 22 in den Verlegeschlitz 38 kontinuierlich Positionsänderungen des Reflektors 24 erfassen lassen. Bei dieser Erfassungseinrichtung 12 kann es sich beispielsweise um einen Tachymeter, insbesondere um eine Totalstation mit automatischer Zielverfolgung handeln, welche kontinuierlich die Position des Reflektors 24 vermisst.

Da derartige Tachymeter jedoch in aller Regel lediglich Entfernungen und Winkel bzw. Winkeländerungen messen, ist ferner eine Auswerteeinheit 30 vorgesehen, welche sich entweder bei dem Tachymeter 12 oder auch direkt am Verlegepflugfahrzeug 10 befinden kann. Bei dieser Auswerteeinheit kann es sich beispielsweise um einen Mikroprozessor handeln, welcher programmtechnisch derart eingerichtet ist, dass er auf Grundlage der von dem Tachymeter 12 erfassten Positionsdaten die Höhenlage der eingepflügten Leitungen 22 in Abhängigkeit von deren Lagekoordinaten in der Ebene bestimmen kann. Im Falle dass sich die Auswerteeinheit 30 dabei an dem Verlegepflugfahrzeug 10 befinden sollte, kommunizieren der Tachymeter 12 und die Auswerteeinheit 30 über geeignete Sende- und Empfangseinheiten miteinander, um die von dem Tachymeter erfassten Positionsdaten beispielsweise per Funk an die Auswerteeinheit 30 übertragen zu können.

Die auf diese Weise erhaltenen Koordinaten der verlegten Leitung 22 werden nun beispielsweise über einen im Führerstand des Verlegepflugfahrzeugs 10 befindlichen Anzeigebildschirm angezeigt. Auf diese Weise könnte die Bedienperson des Verlegepflugfahrzeugs 10 durch kontinuierliches Vergleichen der Koordinaten der Leitungssolltrasse mit den Istkoordinaten der verlegten Leitung 22 auf eine etwaige Fehllage schließen, um anschließend bei Bedarf auf den Verlegevorgang Einfluss zu nehmen, indem sie beispielsweise eine etwaige zu geringe Verlegetiefe korrigiert.

Um eine weitere Automatisierung des Verfahrens zu erreichen, kann das System ferner eine Vergleichseinheit 32 umfassen, welche Bestandteil der Auswerteeinheit 30 in Form eines Mikrocomputers an dem Verlegepflugfahrzeug 10 sein kann. Diese Vergleichseinheit 32 ist eingerichtet, um eine etwaige Lageabweichung der eingefügten Leitung 22 gegenüber der Leitungssolltrasse zu ermitteln. Auf diese Weise lässt sich von der Vergleichseinheit 32 ein eine etwaige Lageabweichung repräsentierendes Signal regenerieren, welches dann beispielsweise an einem Anzeigebildschirm 34 visualisiert werden kann.

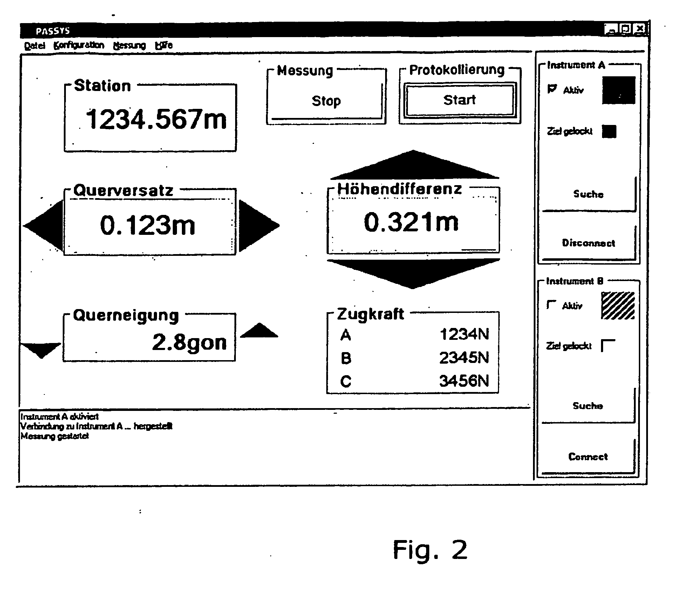

Eine derartige Visualisierung ist in der Fig. 2 dargestellt. Wie diesem Bildschirmausdruck entnommen werden kann, befindet sich das Verlegepflugfahrzeug 10 momentan an der Station 1234,567 m. Dieser Zahlenwert entspricht der Längenentwicklung der verlegten Leitung ab einem definierten Start- oder Bezugpunktpunkt in Metern. Durch die Vermessung der Istkoordinaten der verlegten Leitung 22 in der voran beschriebenen Weise wurde dabei durch Auswertung der von dem Tachymeter 12 erfassten Positionsdaten und Vergleich derselben mittels der Vergleichseinheit 32 festgestellt, dass an der aktuellen Station 1234,567 m die Leitung einen Querversatz von 0,123 m nach rechts und eine Höhenfehllage von 0,321 m nach unten aufweist. Durch die angezeigten Pfeile wird der Bedienperson im Führerstand des Verlegepflugfahrzeugs 10 somit visualisiert, dass sie den Verlegepflug nach links steuern und die Verlegetiefe verringern muss, um die Leitung 22 der Leitungssolltrasse wieder anzunähern. Durch die Visualisierung in Form der dargestellten Pfeile braucht die Bedienperson somit nicht selbst die Leitungsist- mit den Leitungssollkoordinaten vergleichen; vielmehr wird dieser Vergleich von der Vergleichseinheit 32 vorgenommen und mittels des Anzeigebildschirms visualisiert, so dass die Bedienperson lediglich noch das Verlegepflugfahrzeug 10 und die Verlegetiefe den dargestellten Pfeilen entsprechend steuern muss.

Anstelle händisch auf den Verlegevorgang in der voran beschriebenen Weise Einfluss zu nehmen, kann das Verlegeverfahren jedoch auch weiter automatisiert werden, indem eine entsprechend eingerichtete Steuereinrichtung 36 vorgesehen wird, welche eingerichtet ist, um in Abhängigkeit von einer etwaigen Abweichung der Istkoordinaten der Leitung gegenüber der Leitungssolltrasse die Bewegungsrichtung des Pflugschwerts 16 einzustellen. In diesem Falle würde die Steuereinrichtung 36 die von der Vergleichseinheit 32 zur Verfügung gestellten, eine etwaige Lageabweichung repräsentierenden Signale zur Ansteuerung von Betätigungsaktoren verwenden, mit denen sich beispielsweise der Seiteneinschlag des Pflugschwerts 16 oder dessen Längsneigung einstellen lässt, um somit den Leitungsverlauf der Leitungssolltrasse wieder anzunähern.

Wie der Darstellung der Fig. 1 entnommen werden kann, ist im Bereich des Einführtrichters des Einführelements 18 eine hier nur schematisch dargestellte Kraftmesseinrichtung 42 vorgesehen, welche kontinuierlich die Kräfte misst, welche von der Leitung 22 während des Einpflügevorgangs auf sie ausgeübt werden. Zwar stellen diese Kräfte nicht zwangsweise schon die Längszugkräfte dar, welche während des Einpflügevorgangs auf die Leitung 22 beispielsweise in Folge der Umlenkung im Einführelement 18 oder infolge Reibung ausgeübt werden, jedoch lassen sich die von der Kraftmesseinrichtung 42 erfassten Kräfte durch einfache Multiplikation mit einem Faktor in entsprechende Längszugkräfte in der Leitung 22 umrechnen. Auf diese Weise lassen sich kontinuierlich die während des Einpflügevorgangs in der Leitung 22 herrschenden Längszugkräfte erfassen und zusammen mit etwaigen Lageabweichungen der Leitung 22 visualisieren, wie dies dem in der Fig. 2 dargestellten Ausdruck eines Anzeigebildschirms entnommen werden kann, demzufolge drei Leitungen A, B, C gleichzeitig eingepflügt werden, von denen jede anderen Längszugkräften an der Station 1234,567 m ausgesetzt ist.

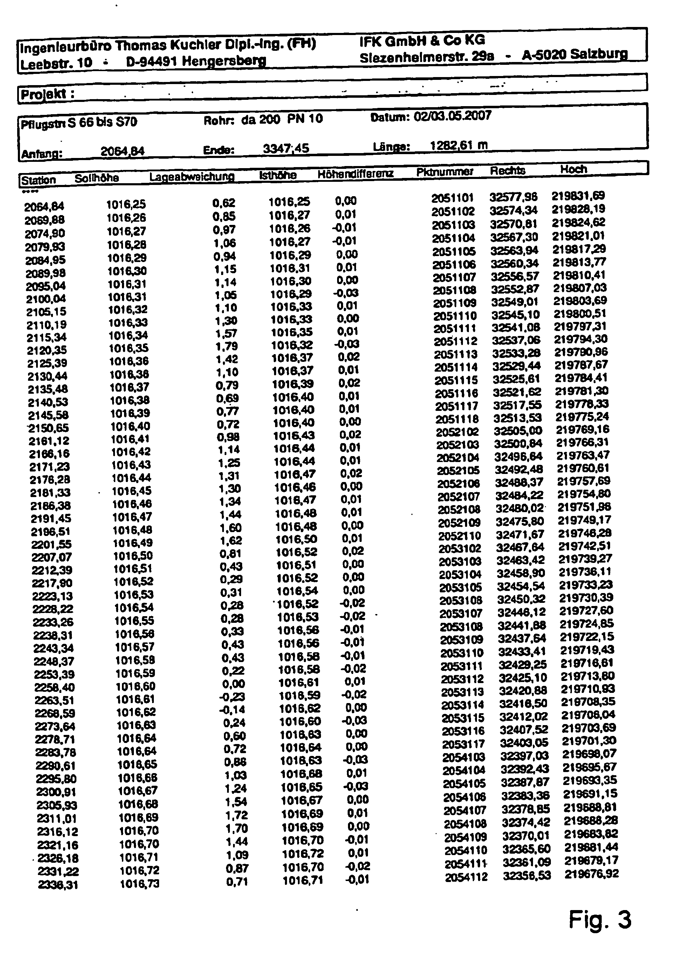

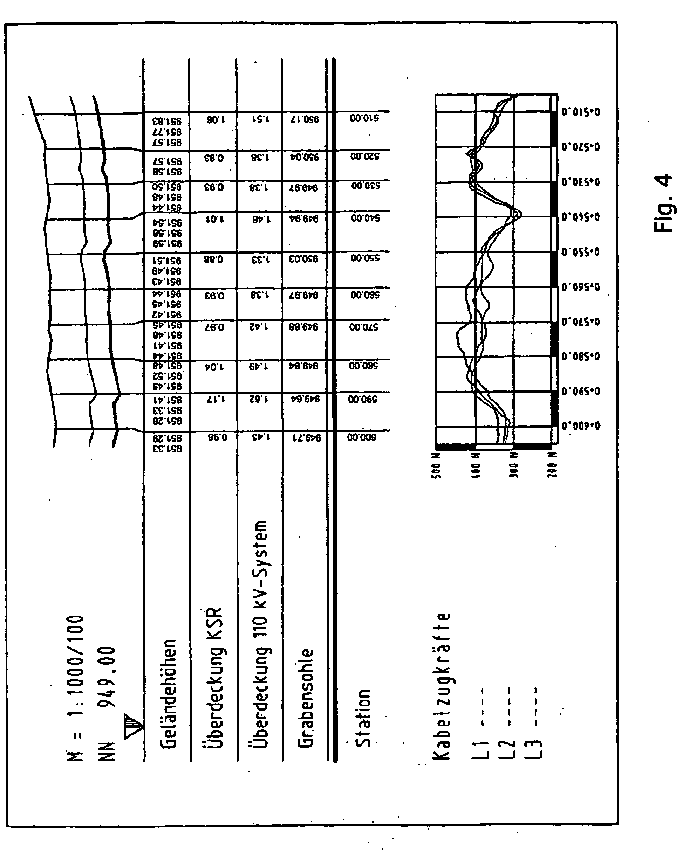

Zu Zwecken der Qualitätssicherung und Dokumentation werden die von der Auswerteeinheit 30 ermittelten Leitungskoordinaten einschließlich der von der Kraftmesseinrichtung 42 ermittelten Längszugkräfte in einer Protokolldatei abgespeichert, deren Inhalte zu einem späteren Zeitpunkt ausgelesen und tabellarisch und/oder graphisch dargestellt werden können. Entsprechende Ausdrucke einer derartigen Protokolldatei sind in den Fig. 3 und 4 dargestellt.

Bei der in der Fig. 3 dargstellten Tabelle ist in der ersten Spalte die Längenentwicklung der Leitungssolltrasse in Metern, in Spalte 2 die Sollhöhe der zu verlegenden Leitung 22, in Spalte 3 die Lageabweichung der verlegten Leitung 22 von der Solltrasse, in Spalte 4 die Isthöhe der verlegten Leitung 22, in Spalte 5 die Höhendifferenz zwischen der Sollhöhe der zu verlegenden Leitung 22 und deren Isthöhe, in Spalte 6 eine variable Punktnummer und in den Spalten 7 und 8 die Rechts- und Hochkoordinaten der Leitungssolltrasse an den jeweiligen Stationen gelistet.

Die in der fünften Spalte der Tabelle gelistete Höhendifferenz ergibt sich durch Vergleich der Sollhöhe aus Spalte 2 mit der Isthöhe aus Spalte 4. Anhand der so ermittelten Höhendifferenz kann somit zu Zwecken der Qualitätskontrolle im Nachhinein festgestellt werden, ob die erforderliche Verlegetiefe eingehalten wurde. Sollte dies an einzelnen Stationen nicht zutreffen, so ließen sich dann in einem nachgelagerten Bearbeitungsschritt an den betroffenen Stellen bzw. Stationen entsprechende Korrekturen vornehmen.

Die Fig. 4 zeigt eine der Fig. 3 entsprechende Darstellung in graphischer Form, anhand derer die vorhandene Verlegetiefe sowie die an den einzelnen Stationen in den Leitungen 22 herrschenden Zugkräfte sehr einfach kontrolliert werden können.

Die auf diese Weise visualisierten Protokolldateien können somit im Nachhinein als Beleg dafür verwendet werden, dass zum einen die erforderliche Verlegetiefe und zum anderen die zulässigen Zugkräfte bei der Leitungsverlegung eingehalten wurden, was gerade bei der Verlegung von Hochspannungsleitungen aus Sicherheitsgründen zwingend erforderlich ist.

Obwohl die Erfindung in der Figuren anhand eines Pflügeverfahrens erläutert wurde, bei dem die Leitung von oben durch das Einführelement hindurch in den Verlegeschlitz eingeführt wird, sei der Vollständigkeit halber noch erwähnt, dass die Erfindung hierauf nicht beschränkt ist.

Vielmehr ist es ebenso möglich, eine Leitung unter Verwendung des Torpedo- oder Raketenpflugverfahren überwacht im Erdreich zu verlegen, indem während des Einbringens der Leitung in den Verlegeschlitz wiederholt Leitungspositionsdaten entlang der in den Schlitz eingebrachten Leitung durch Vermessen eines sich mit dem Einführelement mitbewegenden, für die Verlegetiefe der Leitung repräsentativen Punktes ermittelt werden, welcher in vertikaler Richtung einen definierten, konstanten Abstand zu einer auf der Sohle des Verlegeschlitzes aufstehenden Unterseite des Einführelements in Form des bei dem Torpedo- oder Raketenpflugverfahren verwendeten Aufweitkörpers aufweist.

### Bezugszeichenliste

- 10: Verlegepflugfahrzeug
- 12: Robotiktachymeter
- 14: Pflugfahrzeug
- 16: Pflugschwert
- 18: Einführelement
- 20: Zugseil
- 22: Leitung
- 24: Reflektor/aktives Prisma
- 26: Auslegerarme
- 28: Stab
- 30: Auswerteeinheit
- 32: Vergleichseinheit
- 34: Ausgabeeinrichtung
- 36: Steuereinrichtung
- 38: Verlegeschlitz
- 40: Sohle
- 42: Kraftmesseinrichtung
- 44: Tragkörper
- 46: Aufstandpunkt von 18 auf 40
- 48: starre Kopplung von 18 und 44
- A: Distanz Unterseite von 18 - 24
- B: Distanz 46 - 24
- E: Erdreich
- H: Erdanhäufung
- X: drahtloser Signalübertragungspfad, Funkverbindung

## Patentansprüche

1. Verfahren zum überwachten Verlegen von Leitungen (22) im Erdreich (E), mit den Schritten:
- Erzeugen eines Verlegeschlitzes (38) im Erdreich (E) zur Aufnahme der zu verlegenden Leitung (22);
- Einbringen der Leitung (22) in den Verlegeschlitz (38) mittels eines in den Verlegeschlitz (38) hineinragenden Einführelements (18), welches auf der Sohle (40) des Verlegeschlitzes (38) in Längsrichtung des Verlegeschlitzes (38) bewegt wird; und
- Ermitteln von Leitungspositionsdaten entlang der eingebrachten Leitung (22) während des Einbringens der Leitung (22) in den Verlegeschlitz (38) durch wiederholtes Vermessen eines sich mit dem Einführelement (18) mitbewegenden, für die Verlegetiefe der Leitung (22) repräsentativen Punktes (24), welcher in vertikaler Richtung einen definierten, konstanten Abstand (A) zu einer auf der Sohle (40) des Verlegeschlitzes (38) aufstehenden Unterseite des Einführelements (18) aufweist;
**gekennzeichnet durch**
- Ermitteln der in der eingepflügten Leitung (22) herrschenden Zugkräfte;
- Abspeichern der ermittelten Zugkräfte in Abhängigkeit von den Lagekoordinaten der Leitungssolltrasse in einer Protokolldatei; und/oder
- Visualisieren der ermittelten Zugkräfte in Abhängigkeit von den Lagekoordinaten der Leitungssolltrasse.

2. Verfahren nach Anspruch 1,
**dadurch gekennzeichnet, dass**
zur Ermittlung der Leitungspositionsdaten die Position des sich mit dem Einführelement (18) mitbewegenden Punktes durch Tachymetrieren, insbesondere mit Hilfe einer selbsttätigen Totalstation mit automatischer Zielverfolgung bestimmt wird.

3. Verfahren nach Anspruch 1 oder 2,
**dadurch gekennzeichnet, dass**
auf Grundlage der Leitungspositionsdaten die Höhenlage der in den Verlegeschlitz (38) eingebrachten Leitung (22) in Abhängigkeit von ihren Lagekoordinaten bestimmt wird.

4. Verfahren nach Anspruch 1, 2 oder 3,
**dadurch gekennzeichnet, dass**
Geländepositionsdaten entlang einer Leitungssolltrasse erfasst werden, insbesondere dass auf Grundlage der Geländepositionsdaten die Höhenlage des Geländes in Abhängigkeit von den Lagekoordinaten der Leitungssolltrasse erfasst wird.

5. Verfahren nach Anspruch 4,
**gekennzeichnet durch** die weiteren Schritte:
- Ermitteln etwaiger Lageabweichungen der eingepflügten Leitung (22) gegenüber der Leitungssolltrasse, wobei vorzugsweise ein die ermittelte Lageabweichung repräsentierendes Signal erzeugt wird.

6. Verfahren nach Anspruch 5,
**dadurch gekennzeichnet, dass**
der Verlegeschlitz (38) mit einem Pflugschwert (16) erzeugt wird, dessen Bewegungsrichtung in Abhängigkeit von der ermittelten Lageabweichung, insbesondere unter Verwendung des die Lageabweichung repräsentierenden Signals, gesteuert wird, wobei vorzugsweise die Pflügetiefe des Pflugschwerts (16) unter Berücksichtigung der Höhenlage des Geländes und der Höhenlage der eingepflügten Leitung (22) gesteuert wird.

7. Verfahren nach zumindest einem der voranstehenden Ansprüche,
**dadurch gekennzeichnet, dass**
die in der eingepflügten Leitung (22) herrschenden Zugkräfte ermittelt werden, indem wiederholt eine von der einzupflügenden Leitung (22) auf das Einführelement (18) ausgeübte Kraft ermittelt und in eine Längszugkraft umgerechnet wird.

8. Verfahren nach Anspruch 7,
**gekennzeichnet durch** die Schritte:
- Abspeichern der ermittelten Gelände- und Leitungskoordinaten, insbesondere deren jeweilige Höhenlage, in Abhängigkeit von den Lagekoordinaten der Leitungssolltrasse in einer Protokolldatei; und/oder
- Visualisieren der ermittelten Gelände- und Leitungskoordinaten, insbesondere deren jeweilige Höhenlage, in Abhängigkeit von den Lagekoordinaten der Leitungssolltrasse.

9. Verfahren nach Anspruch 8,
**dadurch gekennzeichnet, dass**
die ermittelten Gelände- und Leitungskoordinaten tabellarisch und/oder graphisch visualisiert werden.

10. System zum überwachten Verlegen von Leitungen (22) im Erdreich (E), umfassend:
- einen Verlegepflug mit einem Pflugschwert (16) zum Erzeugen eines Verlegeschlitzes (38) im Erdreich (E) zur Aufnahme der zu verlegenden Leitung (22);
- ein mit dem Pflugschwert (16) gekoppeltes Einführelement (18), welches auf der Sohle (40) des Verlegeschlitzes (38) in Längsrichtung desselben bewegbar ist und welches eine auf der Sohle (40) aufstehende Unterseite umfasst, wobei das Einführelement (18) mit einem Reflektor (24) gekoppelt ist, der sich an einem für die Verlegetiefe der Leitung repräsentativen Punkt befindet, welcher in vertikaler Richtung einen definierten, konstanten Abstand (A) zu der auf der Sohle (40) des Verlegeschlitzes (38) aufstehenden Unterseite des Einführelements (18) aufweist; und
- eine Einrichtung (12), welche eingerichtet ist, um während des Einführens der Leitung (22) wiederholt die Position des Reflektors (24) zu erfassen, und welche vorzugsweise ein Tachymeter (12), insbesondere eine Totalstation mit automatischer Zielverfolgung ist;
**dadurch gekennzeichnet, dass**
das System ferner umfasst:
- eine Kraftmesseinrichtung (42), die zur wiederhalten Messung der in der eingepflügten Leitung (22) herrschenden Zugkräfte eingerichtet ist;
- eine Speichereinrichtung, die zur Abspeicherung der ermittelten Zugkräfte in Abhängigkeit von den Lagekoordinaten der Leitungssolltrasse eingerichtet ist; und/oder
- eine Ausgabeeinrichtung (34), die zur visuellen Darstellung der ermittelten Zugkräfte in Abhängigkeit der Lagekoordinaten der Leitungssolltrasse eingerichtet ist.

11. System nach Anspruch 10,
**dadurch gekennzeichnet, dass**
der für die Verlegetiefe repräsentative Punkt, an welchem sich der Reflektor (24) befindet, auch in horizontaler Richtung einen definierten festen Abstand (B) zu der Stelle (46) an der Unterseite des Einführelements (18) aufweist, welche auf der Sohle (40) des Verlegeschlitzes (38) aufsteht.

12. System nach Anspruch 10 oder 11, ferner umfassend:
- eine Auswerteinheit (30), welche eingerichtet ist, um auf Grundlage der von der Erfassungseinrichtung (12) erfassten Positionsdaten die Höhenlage der in den Verlegeschlitz (38) eingebrachten Leitung (22) in Abhängigkeit von ihren Lagekoordinaten zu bestimmen, und/oder
- eine Vergleichseinheit (32), welche eingerichtet ist, um eine Lageabweichung der einpflügten Leitung (22) gegenüber einer Leitungssolltrasse zu ermitteln, wobei die Vergleicheinheit (32) vorzugsweise ferner zur Erzeugung und Ausgabe eines die ermittelte Lageabweichung repräsentierenden Signals eingerichtet ist.

13. System nach Anspruch 12, ferner umfassend:
- eine Steuereinrichtung (36), welche eingerichtet ist, um in Abhängigkeit von einer etwaigen Abweichung der Leitungskoordinaten gegenüber der Leitungssolltrasse, insbesondere unter Verwendung des die Lageabweichung repräsentierenden Signals, die Bewegungsrichtung des Pflugschwerts (16) einzustellen, wobei die Steuereinrichtung (36) vorzugsweise ferner eingerichtet ist, um in Abhängigkeit von der ermittelten Höhenlage der eingepflügten Leitung (22) die Pflügetiefe des Pflugschwerts (16) einzustellen.

14. System nach Anspruch 13,
**dadurch gekennzeichnet, dass**
die Steuereinrichtung (36) und die Vergleichseinheit (32) und/oder die Auswerteeinheit und die Vergleichseinheit drahtlos miteinander kommunizieren.

15. System nach zumindest einem der Ansprüche 10 bis 14,
**dadurch gekennzeichnet, dass**
die Speichereinrichtung ferner eingerichtet ist, um die ermittelten Gelände- und Leitungskoordinaten, insbesondere deren jeweilige Höhenlage, in Abhängigkeit von den Lagekoordinaten der Leitungssolltrasse abzuspeichern, und/oder
die Ausgabeeinrichtung (34) ferner eingerichtet ist, um die ermittelten Gelände- und Leitungskoordinaten, insbesondere deren jeweilige Höhenlage, in Abhängigkeit der Lagekoordinaten der Leitungssolltrasse visuell, insbesondere tabellarisch und/oder graphisch, darzustellen.

## Claims

1. A method for the monitored laying of lines (22) in the earth (E) comprising the steps:
- producing a laying trench (38) in the earth (E) for receiving the line (22) to be laid;
- introducing the line (22) into the laying trench (38) by means of an introduction element (18) which projects into the laying trench (38) and which is moved on the base (40) of the laying trench (38) in the longitudinal direction of the laying trench (38); and
- determining line position data along the introduced line (22) during the introduction of the line (22) into the laying trench (38) by repeated measurement of a point (24) which moves along with the introduction element (18), which is representative for the laying depth of the line (22) and which has a defined, constant spacing (A) in the vertical direction from a lower side of the introduction element (18) standing on the base (40) of the laying trench (38),
**characterised by**
- determining the tensile forces present in the ploughed-in line (22);
- storing the determined tensile forces in dependence on the positional coordinates of the desired line route in an electronic protocol file; and/or
- visualising the determined tensile forces in dependence on the positional coordinates of the desired line route.

2. A method in accordance with claim 1,
**characterised in that**
the position of the point moving along with the introduction element (18) is determined, for the determination of the line position data, by tachymeter measurement, in particular with the aid of an automatic total station having automatic target tracking.

3. A method in accordance with claim 1 or claim 2,
**characterised in that**
the vertical position of the line (22) introduced into the laying trench (38) is determined on the basis of the line position data in dependence on the positional coordinates of said line.

4. A method in accordance with claim 1, claim 2 or claim 3,
**characterised in that**
terrain position data are detected along a desired line route; in particular **in that** the vertical position of the terrain is detected on the basis of the terrain position data in dependence on the positional coordinates of the desired line route.

5. A method in accordance with claim 4,
**characterised by** the further steps:
- determining any positional deviations of the ploughed-in line (22) with respect to the desired line route, with a signal representing the determined positional deviation preferably being produced.

6. A method in accordance with claim 5,
**characterised in that**
the laying trench (38) is produced by a ploughshare (16) whose direction of movement is controlled in dependence on the determined positional deviation, in particular using the signal representing the positional deviation, with the ploughing depth of the ploughshare (16) preferably being controlled while taking account of the vertical position of the terrain and of the vertical position of the ploughed-in line (22).

7. A method in accordance with at least one of the preceding claims,
**characterised in that**
the tensile forces present in the ploughed-in line (22) are determined in that a force exerted on the introduction element (18) by the line (22) to be ploughed in is determined repeatedly and is converted into a horizontal tensile force.

8. A method in accordance with claim 7,
**characterised by** the steps:
- storing the determined terrain coordinates and line coordinates, in particular their respective vertical positions, in dependence on the positional coordinates of the desired line route in an electronic protocol file; and/or
- visualising the determined terrain coordinates and line coordinates, in particular their respective vertical positions, in dependence on the positional coordinates of the desired line route.

9. A method in accordance with claim 8,
**characterised in that**
the determined terrain coordinates and line coordinates are visualised in a table and/or graphically.

10. A system for the monitored laying of lines (22) in the earth (E), comprising:
- a laying plough having a ploughshare (16) for producing a laying trench (38) in the earth (E) for receiving the line (22) to be laid;
- an introduction element (18) which is coupled to the ploughshare (16), which is movable on the base (40) of the laying trench (38) in the longitudinal direction thereof and which includes a lower side standing on the base (40), wherein the introduction element (18) is coupled to a reflector (24) which is located at a point which is representative for the laying depth of the line and which has a defined, constant spacing (A) in the vertical direction from the lower side of the introduction element (18) standing on the base (40) of the laying trench (38); and
- a device (12) which is configured to detect the position of the reflector (24) repeatedly during the introduction of the line (22) and which is preferably a tachymeter (12), in particular a total station having automatic target tracking,
**characterised in that**
the system further comprises:
- a force measurement device (42) which is configured for the repeated measuring of the tensile forces present in the ploughed-in line (22);
- a memory device which is configured to store the determined tensile forces in dependence on the positional coordinates of the desired line route; and/or
- an output device (34) which is configured for visually presenting the determined tensile forces in dependence on the positional coordinates of the desired line route.

11. A system in accordance with claim 10,
**characterised in that**
the point which is representative for the laying depth and at which the reflector (24) is located, also has a defined, fixed spacing (B) in the horizontal direction from the point (46) at the lower side of the introduction element (18) which stands on the base (40) of the laying trench (38).

12. A system in accordance with claim 10 or claim 11, furthermore comprising:
- an evaluation unit (30) which is configured to determine the vertical position of the line (22) introduced into the laying trench (38) on the basis of the position data detected by the detection device (12) in dependence on the positional coordinates of said line; and/or
- a comparator (32) which is configured to determine a positional deviation of the ploughed-in line (22) with respect to a desired line route, wherein the comparator (32) is preferably further configured for producing and outputting a signal representing the determined positional deviation.

13. A system in accordance with claim 12, further comprising:
- a control device (36) which is configured to set the movement direction of the ploughshare (16) in dependence on any deviation of the line coordinates with respect to the desired line route, in particular while using the signal representing the positional deviation, wherein the control device (36) is preferably further configured to set the ploughing depth of the ploughshare (16) in dependence on the determined vertical position of the ploughed-in line (22).

14. A system in accordance with claim 13,
**characterised in that**
the control device (36) and the comparator (32) and/or the evaluation unit and the comparator communicate wirelessly with one another.

15. A system in accordance with at least one of the claims 10 to 14, **characterised in that**
the memory device is furthermore configured to store the determined terrain coordinates and line coordinates, in particular their respective vertical positions, in dependence on the positional coordinates of the desired line route; and/or
the output device (34) is furthermore configured to present visually, in particular in a table and/or graphically, the determined terrain coordinates and line coordinates, in particular their respective vertical positions, in dependence on the positional coordinates of the desired line route.

## Revendications

1. Procédé pour la pose surveillée de lignes ou conduites (22) dans le sol (E), comprenant les étapes consistant à :
- engendrer une tranchée de pose (38) dans le sol (E) pour recevoir la ligne ou conduite (22) à poser ;
- introduire la ligne ou conduite (22) dans la tranchée de pose (38) au moyen d'un élément d'introduction (18) qui pénètre dans la tranchée de pose (38) et qui est déplacé sur le fond (40) de la tranchée de pose (38) en direction longitudinale de la tranchée de pose (38) ; et
- déterminer des données de position de ligne ou conduite le long de la ligne ou conduite introduite (22) pendant l'introduction de la ligne ou conduite (22) dans la tranchée de pose (38) par mesurage répété d'un point (24) qui se déplace conjointement avec l'élément d'introduction (18) et qui est représentatif pour la profondeur de pose de la ligne de conduite (22), ce point présentant en direction verticale une distance constante définie (A) par rapport à une face inférieure, dressée sur le fond (40) de la tranchée de pose (38), de l'élément d'introduction (18) ; **caractérisé par** les étapes consistant à :
- déterminer les forces de traction qui règnent dans la ligne ou conduite (22) enterrée ;
- mémoriser les forces de traction déterminées en fonction des coordonnées de position du tracé de consigne de la ligne ou conduite dans un fichier de protocole ; et/ou
- visualiser les forces de traction déterminées en fonction des coordonnées de position du tracé de consigne de la ligne ou conduite.

2. Procédé selon la revendication 1,
**caractérisé en ce que**, pour déterminer les données de position de la ligne ou conduite, on détermine la position du point qui se déplace conjointement avec l'élément d'introduction (18) par des techniques de tachymétrie, en particulier à l'aide d'une station globale autonome avec poursuite automatique de cible.

3. Procédé selon la revendication 1 ou 2,
**caractérisé en ce que**, en se basant sur les données de position de la ligne ou conduite, on détermine la situation en hauteur de la ligne ou conduite (22) introduite dans la tranchée de pose (38) en fonction de ses coordonnées de situation.

4. Procédé selon la revendication 1, 2 ou 3,
**caractérisé en ce que** l'on détecte des données de position de terrain le long d'un tracé de consigne de la ligne ou conduite, et en particulier **en ce que**, en se basant sur les données de position de terrain, on détecte la situation en hauteur du terrain en fonction des coordonnées de situation du tracé de consigne de la ligne ou conduite.

5. Procédé selon la revendication 4,
**caractérisé par** les autres étapes consistant à :
- déterminer d'éventuels écarts de situation de la ligne ou conduite enterrée (22) par rapport au tracé de consigne, et à générer de préférence un signal représentant l'écart de situation déterminé.

6. Procédé selon la revendication 5,
**caractérisé en ce que** la tranchée de pose (38) est engendrée avec un soc de creusement (16) dont la direction de déplacement est commandée en fonction de l'écart de situation déterminé, en particulier en utilisant le signal représentant l'écart de situation, et la profondeur de creusement du soc de creusement (16) est de préférence commandée en tenant compte de la situation en hauteur du terrain et de la situation en hauteur de la ligne ou conduite (22) enterrée.

7. Procédé selon l'une au moins des revendications précédentes,
**caractérisé en ce que** les forces de traction régnant dans la ligne ou conduite (22) enterrée sont déterminées en déterminant de façon répétée une force exercée par la ligne à enterrer (22) sur l'élément d'introduction (18) et en la convertissant en une force de traction longitudinale.

8. Procédé selon la revendication 7,
**caractérisé par** les étapes consistant à :
- mémoriser les coordonnées déterminées du terrain et de la ligne ou conduite, en particulier leur situation en hauteur, en fonction des coordonnées de situation du tracé de consigne de la ligne ou conduite dans un fichier de protocole ; et/ou
- visualiser les coordonnées déterminées du terrain et de la ligne ou conduite, en particulier leur situation respective en hauteur, en fonction des coordonnées de situation du tracé de consigne de la ligne ou conduite.

9. Procédé selon la revendication 8,
**caractérisé en ce que** les coordonnées déterminées du terrain et de la ligne ou conduite sont visualisées sous la forme d'un tableau et/ou d'un graphique.

10. Système pour la pose surveillée de lignes ou conduites (22) dans le sol (E), comprenant :
- une charrue de pose avec un soc de creusement (16) pour engendrer une tranchée de pose (38) dans le sol (E) pour recevoir la ligne ou conduite (22) à poser ;
- un élément d'introduction (18) accouplé au soc de creusement (16), cet élément étant déplaçable sur le fond (40) de la tranchée de pose (38) dans la direction longitudinale de celle-ci et comprenant une face inférieure dressée sur le fond (40), ledit élément d'introduction (18) étant couplé à un réflecteur (24) qui se trouve à un point représentatif pour la profondeur de pose de la ligne ou conduite, ce point présentant en direction verticale une distance définie constante (A) par rapport à la face inférieure, dressée sur le fond (40) de la tranchée de pose (38), de l'élément d'introduction (18) ; et
- un dispositif (12) qui est conçu pour détecter, pendant l'introduction de la ligne ou conduite (22), de façon répétée la position du réflecteur (24), et qui est de préférence un tachymètre (12), en particulier une station globale avec poursuite automatique de cible ;
**caractérisé en ce que**
le système comprend en outre :
- un dispositif de mesure de force (42) qui est conçu pour le mesurage répété des forces de traction régnant dans la ligne ou conduite enterrée (22) ;
- un dispositif à mémoire, qui est conçu pour mémoriser les forces de traction déterminées en fonction des coordonnées de situation du tracé de consigne de la ligne ou conduite ; et/ou
- un dispositif de sortie (34) qui est conçu pour la représentation visuelle des forces de traction déterminées en fonction des coordonnées de situation du tracé de consigne de la ligne ou conduite.

11. Système selon la revendication 10,
**caractérisé en ce que** le point représentatif pour la profondeur de pose, auquel se trouve le réflecteur (24), présente également en direction horizontale une distance fixe définie (B) par rapport à l'emplacement (46) à la face inférieure de l'élément d'introduction (18) qui est dressé sur le fond (40) de la tranchée de pose (38).

12. Système selon la revendication 10 ou 11, comprenant en outre :
- une unité d'évaluation (30) qui est conçue, en se basant sur les données de position détectées par le dispositif de détection (12), pour déterminer la situation en hauteur de la ligne ou conduite (22) introduite dans la tranchée de pose (38) en fonction de ses coordonnées de situation, et/ou
- une unité de comparaison (32) qui est conçue pour déterminer un écart de situation de la ligne ou conduite (22) enterrée par rapport à un tracé de consigne de la ligne ou conduite, ladite unité de comparaison (32) étant en outre de préférence conçue pour générer et délivrer un signal représentant l'écart de situation déterminé.

13. Système selon la revendication 12, comprenant en outre :
- un dispositif de commande (36) qui est conçu, en fonction d'un éventuel écart des coordonnées de la ligne ou conduite par rapport au tracé de consigne de la ligne de conduite, et en particulier en utilisant le signal représentant l'écart de situation, pour régler la direction de déplacement du soc de creusement (16), ledit dispositif de commande (36) étant en outre de préférence conçu pour régler la profondeur de creusement du soc de creusement (16) en fonction de la situation en hauteur déterminée de la ligne ou conduite (22) enterrée.

14. Système selon la revendication 13,
**caractérisé en ce que** le dispositif de commande (36) et l'unité de comparaison (32) et/ou l'unité d'évaluation et l'unité de comparaison communiquent les un(e)s avec les autres sans fil.

15. Système selon l'une au moins des revendications 10 à 14, **caractérisé en ce que**
le dispositif à mémoire est en outre conçu pour mémoriser les coordonnées déterminées du terrain et de la ligne ou conduite, en particulier leur situation en hauteur respective, en fonction des coordonnées de situation du tracé de consigne de la ligne ou conduite,
et/ou
le dispositif de sortie (34) et en outre conçu pour représenter les coordonnées déterminées du terrain et de la ligne conduite, en particulier leur situation en hauteur respective, en fonction des coordonnées de situation du tracé et de consigne de la ligne ou conduite, de manière visuelle et en particulier sous forme d'un tableau et/ou d'un graphique.
